# EUROPEAN PATENT SPECIFICATION

(11) **EP 4 031 446 B1**
(45) Date of publication and mention of the grant of the patent: **19.03.2025**
(21) Application number: 19945945.4
(22) Date of filing: 20.09.2019
(51) Int. Cl.: B64C 1/14, E05B 17/00, E05B 81/00

(54) **SELF-SECURING LATCH BAR ARRANGEMENT AND METHOD FOR ITS ACTIVATION**
SELBSTSICHERNDE VERRIEGLUNGSSTANGENANORDNUNG UND VERFAHREN ZU DEREN AKTIVIERUNG
AGENCEMENT DE BARRE DE VERROUILLAGE À FIXATION AUTOMATIQUE ET PROCÉDÉ POUR SON ACTIVATION

(43) Date of publication of application: 27.07.2022
(73) Proprietor: SAAB AB, 581 88 Linköping (SE)
(72) Inventor: SCHUSTER, Samuel, 582 56 Linköping (SE); KARLSSON, Håkan, 595 91 Mjölby (SE)
(74) Representative: Zacco Sweden AB
(86) International application number: PCT/SE2019/050897
(87) International publication number: WO 2021/054879

(56) References cited:
- WO-A1-2018/203805
- WO-A1-2018/203805
- US-A- 4 680 891
- US-A1- 2009 152 398
- US-A1- 2009 152 398
- US-A1- 2010 219 647

## Description

### TECHNICAL FIELD

The present invention relates to a self-securing latch member arrangement and a method for secure locking of the self-securing latch member arrangement.

The present invention may concern the industry manufacturing aircraft or may concern the aerospace industries producing components and aircraft articles.

### BACKGROUND

Aircraft doors are designed to be securely closed during flight. Latch members are configured to move into engagement with corresponding latch fittings for locking the aircraft door to the fuselage. The latch member may be formed as a latch bar slideable arranged in fuselage or in the aircraft door, wherein the latch fittings may be anchorage shaped or hook shaped designed for engagement with the mating latch member.

One design used for latch bar arrangement deploys a latch bar slideable in parallel or essentially parallel with the flight direction and comprises mating latch fittings, wherein the latch bar in a latch position is locked by means of a primary locking mechanism and provides latching engagement with the mating latch fittings. The latch bar may comprise recesses, which permit the latch fittings to pass the latch bar, after moving the latch bar to an open position, whereby the aircraft door can be opened.

To avoid translation of the latch bar from the latch position to the open position and erroneous opening of the aircraft door, the latch bar is locked during flight by a safety lock for reliability performance, assuring that no force or torque tend to move the latch bar to the open position.

The aircraft door is preferably allowed to move a few millimetres back and forth, relative to the fuselage, for structural reasons. The aircraft door thus moves a little back and forth in the direction of the prolongation of the latch bar during flight. It is important that this movement does not affect the door structure and wear of the latch bar and/or moves the latch bar from the latch position to the open position.

The pressure differential between the cabin and the atmosphere will push the aircraft door outward. This means that the anchorage-shaped latch fitting or latch member attached to the aircraft door will exert a force outward providing rigid engagement between the anchorage-shaped latch fitting and the latch member for securing the latch member in the latch position.

The current sliding elements or latch bars may be journaled in bearings that must translate the sliding element or latch bar also in a direction transversely to the prolongation of the latch bar, e.g. allowing extra non-axial movement permitting a thickened section of the latch bar to pass the bearings. The actuator mechanism configured to drive the latch bar involves complexity in design for the extra non-axial movement of the latch bar.

US patent 2010/0219647 shows a sliding element that has a thickened area, which interacts with a recess of the door fitting, whereby the sliding element is pressed by a force transverse to the prolongation of the sliding element and secured to move and self-centred by the excess pressure in the fuselage during flying.

WO 2018203805A1 shows an elongated latch bar that is moved for locking door fittings of a door, which door is configured to be opened or closed when the aircraft is standing still. A locking mechanism comprises a stationary latch fitting arrangement and a latch fitting lock configured to be moved by an actuator. The latch fitting lock and the actuator are mounted to the fuselage structure of the aircraft, whereas and the stationary latch fitting arrangement is mounted to the door for saving weight of the aircraft.

US2009152398A1 shows a locking arrangement for limiting the deflection of an aircraft door having a holding element in the door leaf edge. The holding element is brought into engagement with an abutment area of the door leaf edge for ensuring deflection limitation of the door by means of pressure difference between internal pressure and outside air pressure outside the aircraft fuselage.

### SUMMARY OF THE INVENTION

There is an object to provide a self-securing latch arrangement comprising a movable latch member, which is movable between an open position and a latch position and which can be secured in the latch position in a self-securing way and/or in a non-centering way.

There is an object to provide that the aircraft door can be opened by translating the movable latch member longitudinally and/or parallel to the flying direction to an open position without any risk of jamming and with limited wear of bearings and latch mechanisms.

There is an object to provide that no force or torque being able to unlatch or unlock the movable latch member from the latch position, even if the latch member is unintentionally disconnected from its actuation mechanism and/or primary locking mechanism.

There is an object to provide a self-securing latch arrangement that is less complex than prior art arrangements.

There is an object to provide a self-securing latch arrangement that does not cause unwanted vibrations.

There is an object to provide a self-securing latch arrangement that comprises a movable latch member that moves linearly and exclusively axially from the open position to the latch position without any gaps in bearings journaling the movable latch member.

This or at least one of said objects has been achieved by a self-securing latch arrangement configured to latch an aircraft door to an aircraft fuselage comprising a movable latch member configured to be movable from an open position to a latch position; an anchorage-shaped latch fitting comprising a latch fitting end configured for rigid engagement with an abutment surface of the movable latch member when a pressure differential between the aircraft fuselage interior and the atmosphere generates a force that pushes the aircraft door, and thereby the anchorage-shaped latch fitting or movable latch member, in a direction outward; wherein the movable latch member comprises a latch fitting end facing side; and the latch fitting end facing side comprises an indentation forming said abutment surface.

The movable latch member is formed as an elongated latch bar being configured to be moved exclusively axially.

Alternatively, a frictional element of the anchorage-shaped latch fitting is configured for rigid engagement with the abutment surface of the indentation.

Alternatively, the movable latch member is formed with a recess permitting the latch fitting end to pass the movable latch member in the open position.

Alternatively, the latch fitting end facing side comprises a sliding surface that extends from the recess to the indentation, along which sliding surface the anchorage-shaped latch fitting slides when moving the movable latch member toward the open position (whereas the latch fitting end being in sliding contact with the sliding surface).

Alternatively, the abutment surface entirely or partly being encircled by an upward slope.

Alternatively, the anchorage-shaped latch fitting is configured to hold the movable latch member, by said pressure differential, whereby the anchorage-shaped latch fitting is pressed against the abutment surface with a force normal to the plane of the abutment surface. In case of relative movement between the aircraft door and the aircraft fuselage during flight, a frictional force between the anchorage-shaped latch fitting and the abutment surface is oriented along said plane and is dependent on a friction coefficient and said normal force.

If the locking mechanism locking the latch member in the latch position is out of function and the frictional conditions are unfavourable and said frictional force starts to progressively drive the latch member towards the open (unsafe) position, this movement will stop when the anchorage-shaped latch fitting comes in contact with the upward slope of the indentation, since the anchorage-shaped latch fitting has to move inward to overcome the upward slope, and the normal force oriented in the inward direction (present when anchorage-shaped latch fitting is in contact with the upward slope) is sufficiently smaller than the normal force pushing the anchorage-shaped latch fitting outward.

Alternatively, the anchorage-shaped latch fitting comprises an attachment end and a hook end.

Alternatively, the aircraft door perimeter is configured to abut an aircraft door opening outline of the aircraft fuselage, wherein the aircraft door perimeter is urged towards the aircraft door opening outline in a direction towards the aircraft door opening outline, when the latch fitting end slides over the sliding surface of the moveable latch member.

Alternatively, the hook end may be replaced by an L-shaped engagement member and/or T-shaped engagement member and/or H-shaped engagement member and/or X-shaped engagement member and/or any form of anchorage-shaped engagement member that provides anchorage engagement between the anchorage-shaped latch fitting and the movable latch member in said latch position.

Alternatively, the hook end is configured for rigid engagement with the abutment surface of the movable latch member.

Alternatively, the movable latch bar comprises an inwardly facing side facing away from the aircraft door when being closed.

Alternatively, the inwardly facing side comprises the latch fitting end facing side.

Alternatively, the indentation of the movable latch member may form a depressed surface collinear with a plane that is situated further away from the inwardly facing side in a direction outward, the depressed surface and the inwardly facing side may be positioned side-by side or adjacent or at a pre-determined distance from each other seen in a direction along the prolongation of the movable latch member.

Alternatively, the self-securing latch arrangement comprises at least two anchorage-shaped latch fittings configured for rigid engagement with a respective abutment surface of the movable latch member.

Alternatively, the movable latch member comprises at least two indentations or depressions forming abutment surfaces for rigid engagement with a respective anchorage-shaped latch fitting during said pressure differential.

Alternatively, the movable latch member is formed with at least two recesses each permitting a respective anchorage-shaped latch fitting to pass the movable latch member in the open position.

In such way is achieved a secure latch mechanism as a plurality of engagements between hook ends and abutment surfaces further guaranties a secure locking due to said pressure differential.

Alternatively, the movable latch member is formed as an elongated bar having a rectangular cross-section with a first elongated side formed with a plurality of recesses, a second elongated and wider side formed with indentations, a third elongated side opposite the first elongated side and a fourth elongated and wider side opposite the second elongated and wider side.

Alternatively, the latch fitting end facing side comprises a sliding surface or a non-contact surface that extends from the recess to the indentation, along which the anchorage-shaped latch fitting is able to pass when moving the movable latch member towards the open position.

Alternatively, the latch fitting end facing side may be called sliding side and/or non-contact side of the movable latch member.

Alternatively, the frictional element is configured to provide friction that, during said pressure differential, resists motion of the movable latch member relative the anchorage-shaped latch fitting.

Alternatively, the at least one indentation forms a bottom surface comprising said abutment surface.

Alternatively, the upward slope is configured to meet the anchorage-shaped latch fitting rigidly engaging the abutment surface, during said pressure differential, for preventing the movable latch member to move from the latch position.

Alternatively, the latch fitting end (e.g. the hook end) of the anchorage-shaped latch fitting being in rigid engagement with the abutment surface is permitted to move between a first upward slope and a second upward slope of the indentation during said pressure differential.

Alternatively, the abutment surface extends between the first upward slope and the second upward slope and extends along the prolongation of the movable latch member.

Alternatively, the wideness of the abutment surface seen in the direction of the prolongation is wider than the wideness of the latch fitting end (e.g. the hook end) of the anchorage-shaped latch fitting being in rigid engagement with the abutment surface.

In such way is achieved a non-centering self-securing latch arrangement.

Alternatively, the recess permits the hook end to pass the movable latch member in the open position providing that the aircraft door can be opened wherein the hook end passes the movable latch member in a direction orthogonally to the prolongation of the movable latch bar.

Alternatively, the movable latch member is formed as an elongated latch bar being configured to be moved axially from the open position to the latch position in a direction corresponding with the aircraft flight direction or substantially with the aircraft flight direction or with the prolongation of the aircraft fuselage or substantially with the prolongation of the aircraft fuselage.

Alternatively, the movable latch member is configured to be moved by means of a driving (second) actuator and is configured to be locked in the latch position by a locking mechanism.

Alternatively, the second actuator actuates both the latching and the locking by means of mechanical sequencing.

Alternatively, the anchorage-shaped latch fitting and/or the frictional element is configured to slide along the latch fitting end facing side of the movable latch member and along an imaginary straight line, when moving the movable latch member from the latch position toward the open position.

Alternatively, the abutment surface comprises a frictional element configured for rigid engagement between the abutment surface and the latch fitting end of the anchorage-shaped latch fitting.

Alternatively, the elongated latch bar is journaled in the aircraft fuselage or in the aircraft door and is configured to be moved exclusively axially in a direction corresponding to the prolongation of the elongated latch bar.

Alternatively, the aircraft door is configured to be closed in an aircraft door opening of the aircraft fuselage.

Alternatively, the force pushing the aircraft door outward is caused primarily by said pressure differential, but also by the steady load of the aircraft door and/or by a sealing arrangement, positioned between the aircraft door perimeter and an aircraft door opening outline of the aircraft fuselage when the aircraft door is closed, urging the aircraft door outward.

Alternatively, the latch fitting end facing side extends from a recess to the indentation, along which latch fitting end facing side, the anchorage-shaped latch fitting is able to pass when moving the movable latch member towards the open position as no pressure differential between the aircraft fuselage interior and the atmosphere prevails, or as substantially no pressure differential between the aircraft fuselage interior and the atmosphere prevails, wherein the aircraft door is in spring back state and returned to its original shape and/or spring back sealing arrangement.

Alternatively, the latch fitting end facing side extends along and parallel with the prolongation of the moveable latch member.

Alternatively, the latch fitting end facing side is planar.

Alternatively, the latch fitting end facing side may also be called inwardly facing side in case the anchorage-shaped latch fitting is attached to the aircraft door.

Alternatively, the latch fitting end facing side may also be called outward facing side in case the anchorage-shaped latch fitting is attached to the aircraft fuselage.

Alternatively, when moving the movable latch from the latch position toward the open position, the latch fitting end facing side travels along an imaginary straight line.

Alternatively, the upward slope or the end wall exhibit an angle of inclination relative the plane of the abutment surface of about 20° - 90°, preferably 30°-70°.

Alternatively, the latch fitting end is configured to be brought into abutment with the abutment surface (e.g. inward facing abutment surface) of the movable latch member for providing rigid engagement between the latch fitting end and the movable latch member and securing the movable latch member in the latch position by means of said pressure differential.

Alternatively, the term "hook end" may be changed to "hook end outward facing portion" or "latch fitting end".

Alternatively, in case the movable latch member seeks to move from the latch position, despite the influence of said force bringing the anchorage-shaped latch fitting outward for rigid engagement with the abutment surface of the movable latch member for securing the moveable latch bar, engaging the abutment surface of the indentation, will meet the upward slope, whereby said force prevents the movable latch member to move further.

Alternatively, the bottom surface of an indentation of the movable latch member forms the abutment surface, wherein the depth of the indentation at most corresponds to a distance that the anchorage-shaped latch fitting or movable latch member is brought by said pressure differential.

Alternatively, the latch fitting end facing side of the movable latch member faces the latch fitting end (e.g. the hook end) during a latching sequence, as the latch fitting end leaves the indentation and moves toward the indentation from the open position.

Alternatively, the anchorage-shaped latch fitting may be formed as an anchorage-shaped door fitting comprising an attachment end fixedly attached to the aircraft door.

Alternatively, the attachment end of the anchorage-shaped latch fitting is attached to the aircraft door or to the aircraft fuselage.

Alternatively, the anchorage-shaped latch fitting further comprises a hook end protruding from the attachment end in a direction inward from the inner side of the aircraft door.

Alternatively, the anchorage-shaped latch fitting is hook shaped having a latch fitting end or an engagement portion that is entirely or at least partially facing the inner side of the aircraft door.

Alternatively, the latch fitting end or engagement portion of the anchorage-shaped latch fitting is configured for rigid engagement with the abutment surface of the movable latch member.

Alternatively, the anchorage-shaped latch fitting comprises an outer perimeter surface facing away from the latch fitting end of the anchorage-shaped latch fitting.

Alternatively, in the latch position, the abutment surface of the indentation of the movable latch member faces the latch fitting end.

Alternatively, the movable latch member may comprise a latch bar, a latch hook, a latch clamp, etc.

Alternatively, the movable latch bar is configured to be movable exclusively in axial direction corresponding with the prolongation of the aircraft fuselage and is journaled in bearings fixedly (firmly) attached to the aircraft fuselage.

During the pressure differential and in the latch position, in the event the movable latch member aims to move toward the open position, the upward slope of the indentation perimeter will meet the latch fitting end, which stops any further motion of the movable latch member toward the open position.

The pressure differential will generate an outwardly directed force of the latch fitting end, whereby this provides that an engagement portion of the latch fitting end will be rigidly held toward the abutment surface of the indentation in case of unfavourable friction conditions between the latch fitting end and the abutment surface.

If the friction condition between the abutment surface and the anchorage-shaped latch fitting is unfavourable, the movable latch member may tend to progressively move towards the open position, but will be stopped when reaching the upward slope or end wall of the indentation.

Alternatively, it is not possible for the indentation to pass this the upward slope or end wall, as it requires that the aircraft door has to be moved inward for climbing the upward slope or end wall. Since such tendency of moving the aircraft door inward is overcome by the force generated by the pressure differential forcing the aircraft door outward (bringing also the anchorage-shaped latch fitting or movable latch member outward). In such a way, the movable latch member will be restrained in a self-securing manner.

This or at least one of said objects has been achieved by a method of securing a movable elongated latch bar of a self-securing latch arrangement configured to be moved axially, configured to latch an aircraft door to an aircraft fuselage comprising; the elongated latch bar is configured to be movable from an open position to a latch position; an anchorage-shaped latch fitting comprising a latch fitting end configured for rigid engagement with an abutment surface of the movable elongated latch bar when a pressure differential between the aircraft fuselage interior and the atmosphere generates a force that pushes the aircraft door, and thereby the anchorage-shaped latch fitting or movable elongated latch bar, in a direction latch member, in a direction outward; the movable elongated latch bar comprises a latch fitting end facing side comprising an indentation forming said abutment surface; the method comprises the steps of: closing the aircraft door; moving the movable elongated latch bar from the open position to the latch position; locking the movable elongated latch bar in the latch position; and providing said pressure differential for bringing the latch fitting end of the anchorage-shaped latch fitting into rigid engagement with the abutment surface.

Alternatively, the method comprises the further step of: depressurizing the aircraft fuselage interior for bringing the aircraft door back to its spring back state so that when the force ceases, a frictional resistance between the latch fitting end and the movable latch member is of such low value that the movable latch member enables to be moved from the latch position toward the open position, whereby the movable latch member slides along the latch fitting.

Alternatively, the method comprises the further steps of: unlocking the movable latch member; moving the movable latch member from the latch position to the open position; and opening the aircraft door.

Alternatively, the method comprises the step of providing said pressure differential for bringing the anchorage-shaped latch fitting into abutment with the abutment surface of the indentation.

Alternatively, the method comprises the further step of: depressurizing the aircraft fuselage interior for bringing the aircraft door back to its spring back state.

Alternatively, the method comprises the further step of: depressurizing the aircraft fuselage interior for bringing the aircraft door back to its spring back state moving the anchorage-shaped latch fitting a distance in a direction inward and alternatively away from the abutment surface.

Alternatively, by that the force ceases, the frictional resistance is of such low value that the movable latch member is possible to be moved from the latch position toward the open position, whereby the movable latch member slides along and in engagement with the latch fitting end of the anchorage-shaped latch fitting.

Alternatively, by that the force ceases, the movable latch member is possible to be moved by that the latch fitting end of the anchorage-shaped latch fitting is able to climb over the upward slope of the recess.

Alternatively, when the latch fitting end of the anchorage-shaped latch fitting climbs over the upward slope of the recess of the movable latch member when the movable latch member is moved from the latch position, the aircraft door will be urged inward toward the aircraft fuselage.

Alternatively, the latch fitting end facing side may be called engagement side.

Alternatively, the latch fitting end facing side may comprise a sliding surface configured to slide over and in engagement with the latch fitting end of the anchorage-shaped latch fitting.

Alternatively, the bearings are configured to journal the movable latch member without any gaps and are fixed to the aircraft fuselage.

Alternatively, the indentation of the movable latch member is configured to pass the bearing.

Alternatively, the respective indentation of the movable latch member are configured to pass each corresponding and/or adjacent bearing.

Alternatively, the direction inward means a direction inward toward the centre line of the aircraft fuselage, which centre line extends centrally and parallel with the aircraft fuselage prolongation.

Alternatively, the force produced by said pressure differential affecting the aircraft door may be determined to be of such value, which is higher than the pressure needed for moving the movable latch member along the prolongation forcing the upward slope to press the anchorage-shaped latch fitting inward.

Alternatively, the latch fitting end facing side of the movable latch bar, mounted in the aircraft fuselage, is plane and/or linear along said prolongation, whereas the latch fitting end facing side may be called inward facing side.

Alternatively, the latch fitting end facing side of the movable latch bar, mounted to the aircraft door, is plane and/or linear along said prolongation, whereas the latch fitting end facing side may be called outward facing side.

Alternatively, the latch fitting end facing side is linear along said prolongation, at least at a portion of the latch fitting end facing side that is configured to pass bearings journaling the movable latch member, which at least at one portion comprises the indentation and is configured to pass the bearing exclusively axially.

In such way the movable latch member only is movable exclusively in one direction (axial) between the open position and the latch position providing actuators and bearings less complex than prior art.

This means that no extra gaps in the bearings are required for moving the movable latch member thereby reducing vibrations.

Alternatively, the latch fitting end facing side is configured to travel through at least one bearing of a support member, which is attached to the aircraft fuselage or to the aircraft door.

Alternatively, the latch position is defined as a position, in which the movable latch member is in position to be locked or is locked but yet not secured by the latch fitting end as no pressure differential prevails or may be defined as a position in which the movable latch member is locked and also secured by the latch fitting end by means of the pressure differential.

This or at least one of said objects has been achieved by a self-securing system for secure locking of a movable latch member of a self-securing latch arrangement according to any of claims 1-7, wherein the self-securing system comprises an electronic control circuitry configured to manage the method steps according to any of claims 8 to 10.

Alternatively, the electronic control circuitry is coupled to a first actuator configured to close the aircraft door and to a second actuator configured to move the movable latch member from the open position to the latch position, the electronic control circuitry is further coupled to a third actuator configured to latch the movable latch member and is configured to control the securing the movable latch member of the self-securing system by performing the method steps according to any of claims 8 to 10.

This or at least one of said objects has been achieved by a data medium, configured for storing a program, configured for controlling the self-securing system according to claim 11 or 12, wherein said data medium storing the program comprises a program code stored on the data medium, which program code is readable on the electronic control circuitry to perform the method steps according to any of claims 8 to 10.

This or at least one of said objects has been achieved by a data medium product comprising a program code stored on a data medium, which program code is readable on the electronic control circuitry for performing the method steps according to any of claims 8 to 10, when the data medium according to claim 13 is run on the electronic control circuitry.

Alternatively, the self-securing latch arrangement may comprise aluminium, titanium, composite etc. or may be made of any suitable material.

Alternatively, the wideness of the abutment surface seen in the direction of the prolongation of the moveable latch member is wider than the wideness, seen in the direction of said prolongation, of the latch fitting end being in rigid engagement with the abutment surface.

Alternatively, the abutment surface is planar.

Alternatively, the wideness of the abutment surface is determined by the distance between opposite formed upward slopes at both sides of the abutment surface configured to encompass the latch fitting end, when being in latch position, which distance is measured in the direction of said prolongation.

In such way is achieved a non-centering self-securing latch arrangement, which non-centering property of the self-securing latch arrangement involves that the moveable latch member can move back and forth between the upward slopes in case forces generating such motion of the aircraft door prevails and overcome the rigid engagement between the abutment surface and the latch fitting end.

In such way the moveable latch member ables to be journaled in bearings, that only need to permit translation of the moveable latch member axially along to the elongation of the moveable latch member, due to the fact that the indentation manages to pass the bearing, when the moveable latch member is moved between the open position and the latch position.

### BRIEF DESCRIPTION OF THE DRAWINGS

The present disclosure will now be described by way of examples with references to the accompanying schematic drawings, of which:
Figs. 1a-1b illustrate a aircraft door of an aircraft in a view from behind making use of a self-securing latch arrangement according to a first and second example;
Figs. 2a-2d illustrate a self-securing latch arrangement according to a third example;
Figs. 3a-3c illustrate a self-securing latch arrangement according to a fourth example.
Figs. 4a-4c illustrate a self-securing latch arrangement according to a fifth example;
Fig. 5 illustrates a self-securing latch arrangement according to a sixth example;
Figs. 6-7 illustrate flowcharts showing exemplary methods of securing a movable latch member of a self-securing latch arrangement;
Fig. 8 illustrates a self-securing system for secure locking of a movable latch member of a self-securing latch arrangement according to a further example;
Fig. 9 illustrates a processor circuitry of a self-securing system comprising a self-securing latch arrangement according to a further example; and
Figs. 10a-10c illustrate a self-securing latch arrangement according to a further example.

### DETAILED DESCRIPTION

Hereinafter, examples of the present disclosure will now be described in detail with reference to the accompanying drawings, wherein for the sake of clarity and understanding of the invention some details of no importance may be deleted from the drawings.

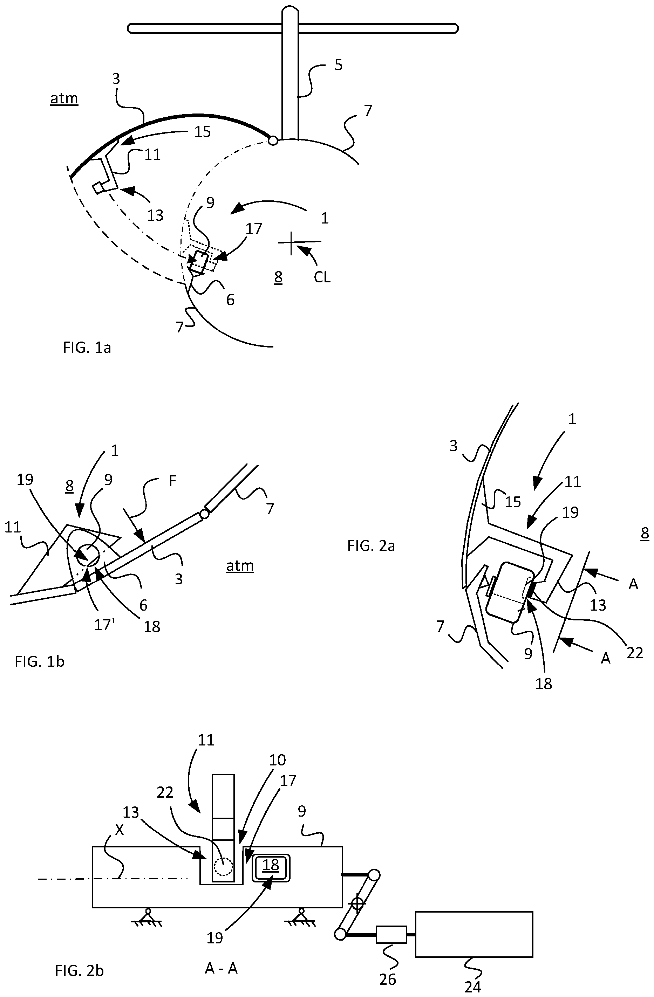

Fig. 1a illustrates an aircraft door 3 of an aircraft 5 in a view from behind making use of a self-securing latch arrangement 1 according to a first example. The self-securing latch arrangement 1 is configured to latch the aircraft door 3 to an aircraft fuselage 7. A movable latch bar 9 is configured to be movable from an open position to a latch position.

Alternatively, the movable latch bar 9 is configured to be movable in the direction of the prolongation of the centre line CL of the aircraft fuselage 7 and is journaled in bearings (not shown) of brackets 6 firmly attached to the aircraft fuselage 7.

In the open position of the movable latch bar 9, a hook end 13 of an anchorage-shaped door fitting 11 is able to pass the movable latch bar 9 via a recess (reference 10 shown in Fig. 2b) of the movable latch bar 9 when closing the aircraft door 3.

Alternatively, the anchorage-shaped door fitting 11 comprises an attachment end 15, which is configured to be firmly attached to the aircraft door 3 and which extends inwardly from the aircraft door inner side toward the fuselage interior in case the door is closed.

The hook end 13 is configured for rigid engagement with an abutment surface 19 of the movable latch bar 9 after sliding the movable latch bar 9 into latch position for rigid engagement with the hook end 13 (see e.g. Fig. 2a).

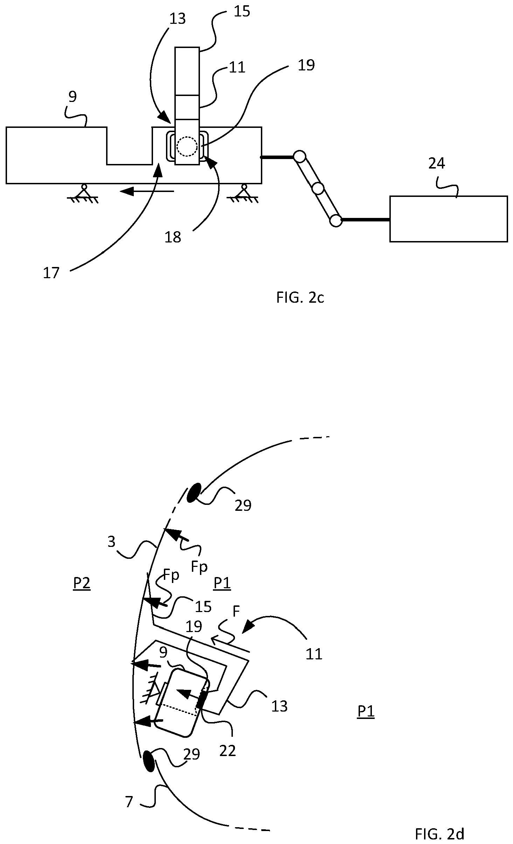

The rigid engagement prevails when a pressure differential between the aircraft fuselage interior 8 and the atmosphere atm causes a force (see e.g. Fig. 2d and reference F) pushing the aircraft door 3 outward together with the anchorage-shaped latch fitting 11 (the aircraft fuselage interior pressure > the atmospheric pressure).

The movable latch bar 9 comprises an inwardly facing side 17 facing away from the aircraft door 3 when closed. The inwardly facing side 17 comprises an indentation 18 forming a bottom surface comprising an abutment surface 19 (see e.g. Fig. 2a).

Alternatively, the depth of the indentation 18 corresponds at most to a distance that the hook end 13 is brought outward by said pressure differential.

Alternatively, the anchorage-shaped latch fitting (hook end 13) is configured to rigidly hold the movable latch member, by said pressure differential, whereby the anchorage-shaped latch fitting 11 is pressed against the abutment surface 19 with the F force normal to the plane of the abutment surface 19. In case of relative movement between the aircraft door 3 and the aircraft fuselage 7 during flight, a frictional force between the anchorage-shaped latch fitting 11 and the abutment surface 19 is oriented along said plane and is dependent on a friction coefficient and said force F.

If the locking mechanism locking the latch member in the latch position is out of function and the frictional conditions are unfavourable and said frictional force starts to progressively drive the latch member towards the open (unsafe) position, this movement will stop when the anchorage-shaped latch fitting 11 comes in contact with an upward slope of the indentation 18, since the anchorage-shaped latch fitting 11 has to move inward to overcome the upward slope, and the normal force F oriented in the inward direction (present when anchorage-shaped latch fitting 11 is in contact with the upward slope) is sufficiently smaller than the normal force F pushing the anchorage-shaped latch fitting 11 outward.

Fig. 1b illustrates an aircraft door 3 making use of a self-securing latch arrangement 1 according to a second example. The self-securing latch arrangement 1 is configured to latch an aircraft door 3 to an aircraft fuselage 7. A movable latch bar 9 is configured to be movable from an open position to a latch position for engagement between an abutment surface 19 of the movable latch bar 9 and an anchorage-shaped latch fitting 11. The movable latch bar 9 is arranged to the aircraft door 3. The anchorage-shaped latch fitting 11 is firmly attached to the aircraft fuselage 7. The rigid engagement prevails when a pressure differential between the aircraft fuselage interior 8 and the atmosphere atm causes a force F pushing the aircraft door 3 outward together with the movable latch bar 9. The movable latch bar 9 comprises an outward facing side 17' facing toward the aircraft door 3. The outward facing side 17' comprises an indentation 18 forming the abutment surface 19.

Figs. 2a-2d illustrate a self-securing latch arrangement 1 according to a third example. Fig. 2a illustrates the self-securing latch arrangement 1 configured to latch the aircraft door 3 to an aircraft fuselage 7. A movable latch bar 9 is positioned in an open position as shown in Fig. 2a and Fig. 2b. The movable latch member is formed as an elongated latch bar being configured to be moved exclusively axially along the axis X.

In the open position, a hook end 13 of an anchorage-shaped door fitting 11 is able to pass the movable latch bar 9 via a recess 10 (see Fig. 2b) of the movable latch bar 9 when closing the aircraft door 3. The anchorage-shaped door fitting 11 comprises an attachment end 15, which is configured to be attached to the aircraft door 3.

The hook end 13 is configured for rigid engagement with an abutment surface 19 of the movable latch bar 9 after sliding the movable latch bar 9 into latch position for engagement with the hook end 13 due to pressure differential, as shown in Fig. 2d.

Alternatively, the engagement thus prevails when the pressure differential between the aircraft fuselage interior 8 and the atmosphere atm causes a force F (see Fig. 2d) of such value that the aircraft door 3 is pushed outward together with the anchorage-shaped latch fitting 11 (the aircraft fuselage interior pressure > the atmospheric pressure) enabling rigid engagement between the anchorage-shaped latch fitting 11 and the abutment surface 19.

The movable latch bar 9 comprises an inwardly facing side 17 facing away from the aircraft door 3 when closed. The inwardly facing side 17 comprises an indentation 18 forming a bottom surface forming said abutment surface 19. The hook end 13 is configured for engagement with the abutment surface 19 of the movable latch bar 9.

A frictional element 22 of the hook end 13 may be configured for rigid engagement with the abutment surface 19 of the indentation 18.

The inwardly facing side 17 extends from the recess 10 to the indentation 18, along which inwardly facing side 17 the hook end 13 slides when moving the movable latch member 9 towards the open position or to the latch position when there is no pressure differential. The movable latch member 9 is configured to be moved by means of a driving actuator 24 and is configured to be locked in the latch position by a locking mechanism 26.

Fig. 2c shows the position of the movable latch bar 9 in the latch position.

The hook end 13 is configured for engagement with the abutment surface 19 of the indentation 18 of the movable latch bar 9 after sliding the movable latch bar 9 into latch position for rigid engagement with the hook end 13. The rigid engagement prevails when a pressure differential between the aircraft fuselage interior and the atmosphere causes a force Fp (see Fig. 2d) pushing the aircraft door 3 outward together with the hook end 13.

Alternatively, due to the pressure differential, the aircraft door 3 is pushed outward together with the anchorage-shaped latch fitting 11 as the attachment end 15 of the anchorage-shaped latch fitting 11 is firmly attached to the inner side of the aircraft door, whereby also the hook end 13 will be moved outward (opposite direction to inwardly direction) by the force F. The pressure P1 is higher than the pressure P2.

An aircraft door mechanism (not shown) is configured to close the aircraft door 3 towards the aircraft fuselage 7 and hold it in position against sealings 29, which seal the aircraft door 3 to the aircraft fuselage 7. Spring back motion of the sealings 29 additionally enhances the force F.

The force F thus holds the hook end 13 (latch fitting end of the anchorage-shaped latch fitting being in rigid engagement with the abutment surface) against the abutment surface 19 of the movable latch bar 9.

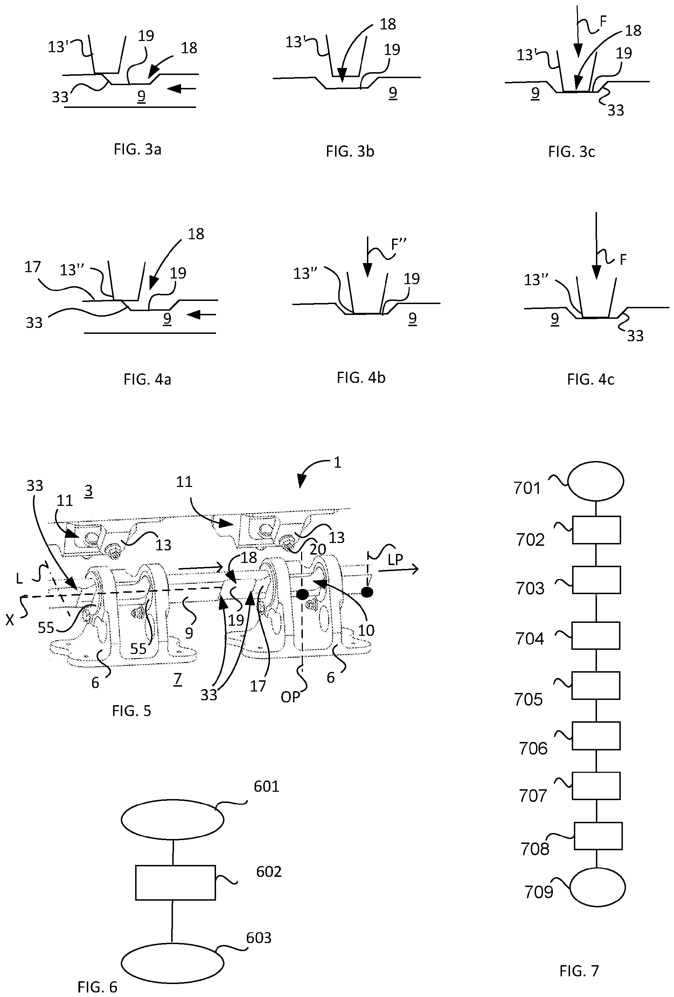

Figs. 3a-3c illustrate an anchorage-shaped latch fitting outermost end 13' moved into rigid engagement with an abutment surface 19 of a movable latch bar 9 of a self-securing latch arrangement according to a fourth example.

The abutment surface 19 may be formed on a bottom surface (entirely or partially thereof) of an indentation 18 of the movable latch bar 9 and may comprise a frictional member (not shown).

The movable latch bar 9 is moved from the open position toward the latch position as shown in Fig. 3a. In Fig. 3b is shown that the moveable latch bar 9 has been moved to the latch position, whereby a locking mechanism (not shown) locks the moveable latch bar 9 in the latch position.

Alternatively, there is no engagement between the anchorage-shaped latch fitting outermost end 13' and the abutment surface 19 yet as there is no pressure differential between the aircraft fuselage interior and the atmosphere pressure outside the aircraft door.

In Fig.3c is shown activation of the self-securing latch arrangement by that the aircraft fuselage interior is pressurized and the aircraft fuselage interior pressure thus being higher than the atmospheric pressure whereby the aircraft door (not shown) is pushed outward bringing the anchorage-shaped latch fitting outermost end 13' into rigid engagement with the abutment surface 19.

The abutment surface 19 and/or bottom surface entirely or partly being encircled by an upward slope 33, which may form a border of the indentation 18.

Alternatively, the upward slope 33 is configured to stop the movable latch member 9 to move further (by means of the anchorage-shaped latch fitting outermost end 13' rigidly held towards the abutment surface 19 by means of the force F) along the prolongation of the movable latch member 9 in case the movable latch member 9 tends to move axially due to aircraft door motion affecting the moveable latch member 9 via the latch fitting end (anchorage-shaped latch fitting outermost end 13').

The aircraft door is preferably allowed to move a few millimetres back and forth, relative to the fuselage, for structural reasons. The aircraft door thus moves a little back and forth in the direction of the prolongation of the latch bar during flight. It is important that this movement does not affect the door structure and wear of the latch bar and/or moves the latch bar from the latch position.

Alternatively, the wideness of the abutment surface seen in the direction of the prolongation is wider than the wideness of the portion (e.g. the hook end) of the anchorage-shaped latch fitting being in frictional contact with the abutment surface.

In such way is achieved a non-centering self-securing latch arrangement.

The upward slope 33 prevents that the movable latch member 9 moves from the latch position.

In case the locking mechanism malfunctions (highly unlikely) and the movable latch member 9 tends to move toward the open position, the upward slope 33 will meet the anchorage-shaped latch fitting outermost end 13‴ rigidly held in position by the force F.

The above-mentioned force F bringing the anchorage-shaped latch fitting outermost end 13‴ in rigid engagement with the abutment surface will counteract and prevent the movable latch member 9 to move further as the force F rigidly holds the anchorage-shaped latch fitting outermost end 13‴ in position and stops the movable latch member 9.

The force F produced by said pressure differential affecting the aircraft door outward may be determined to be of such value, which is higher than the pressure needed for the upward slope 33 to urge the anchorage-shaped latch fitting outermost end 13‴ inward.

Figs. 4a-4c illustrate a self-securing latch arrangement according to a fifth example. An anchorage-shaped latch fitting outermost end 13" is positioned into rigid engagement with an abutment surface 19 of a movable latch bar 9 of a self-securing latch arrangement by moving the movable latch bar 9 to a latch position as shown in Fig. 4b.

The abutment surface 19 may be formed on a bottom surface (entirely or partially thereof) of an indentation 18 of the movable latch bar 9 and may comprise a frictional member (not shown).

The movable latch bar 9 is moved from the open position toward the latch position as shown in Fig. 4a. The movable latch bar 9 comprises a sliding surface 17, which is configured to slide along the outermost end 13". The anchorage-shaped latch fitting outermost end 13" of the anchorage-shaped latch fitting of the self-securing latch arrangement is biased against the sliding surface 17 during the motion of the movable latch bar 9.

In Fig. 4b is shown that the moveable latch bar 9 has been moved to the latch position, whereby a locking mechanism (not shown) locks the moveable latch bar 9 in the latch position. There is provided sliding engagement between the anchorage-shaped latch fitting outermost end 13" and the abutment surface 19 as the aircraft door (despite it is no pressure differential between the aircraft fuselage interior and the atmosphere) is configured to be forced outward by its structure and/or weight and/or sealing between the aircraft door and the aircraft fuselage.

In Fig.4c is shown activation of the self-securing latch arrangement by that the aircraft fuselage interior is pressurized and the aircraft fuselage interior pressure thus being higher than the atmospheric pressure whereby the aircraft door (not shown) is pushed outward bringing the anchorage-shaped latch fitting outermost end 13‴ in rigid engagement with the abutment surface 19.

The abutment surface 19 and/or bottom surface entirely or partly being encircled by an upward slope 33, which may form a border of the indentation 18.

Alternatively, the upward slope 33 is configured to stop the movable latch member 9 to move further (by means of the anchorage-shaped latch fitting outermost end 13‴ rigidly held towards the abutment surface 19 by the force F) along the prolongation of the movable latch member 9 in case the movable latch member 9 tends to move axially due to aircraft door motion.

The aircraft door is preferably allowed to move a few millimetres back and forth, relative to the fuselage, for structural reasons. The aircraft door thus moves a little back and forth in the direction of the prolongation of the latch bar during flight. It is important that this movement does not affect the door structure and wear of the latch bar and/or moves the latch bar from the latch position.

Alternatively, the wideness of the abutment surface seen in the direction of the prolongation is wider than the wideness of the portion (e.g. the hook end) of the anchorage-shaped latch fitting being in frictional contact with the abutment surface.

In such way is achieved a non-centering self-securing latch arrangement.

The upward slope 33 prevents that the movable latch member 9 moves from the latch position.

In case the locking mechanism malfunctions (highly unlikely) and the movable latch member 9 tends to move toward the open position, the upward slope 33 will meet the anchorage-shaped latch fitting outermost end 13‴ rigidly held in position by the force F.

The above-mentioned force F bringing the anchorage-shaped latch fitting outermost end 13‴ outward in rigid engagement with the abutment surface will counteract and prevent the movable latch member 9 to move further as the force F holds the anchorage-shaped latch fitting outermost end 13' rigidly in position and stops the movable latch member 9.

The force F produced by said pressure differential affecting the aircraft door may be determined to be of such value, which is at least higher than the pressure needed for the upward slope 33 to urge the anchorage-shaped latch fitting outermost end 13' outward.

Fig. 5 illustrates a self-securing latch arrangement 1 according to a sixth example. The self-securing latch arrangement 1 is configured to latch an aircraft door 3 to an aircraft fuselage 7. The self-securing latch arrangement 1 comprises a movable latch bar 9 configured to be movable from an open position OP to a latch position LP. The self-securing latch arrangement 1 comprises an anchorage-shaped latch fitting 11 comprising a hook end 13 configured for engagement with an abutment surface 19 of the movable latch bar 9, which engagement prevails when a pressure differential between the aircraft fuselage interior and the atmosphere causes a force (not shown) pushing the aircraft door 3 outward together with the anchorage-shaped latch fitting 11, thus bringing the hook end 13 in rigid engagement with the abutment surface 19. The movable latch bar 9 comprises a latch fitting end facing side 17 (or called inwardly facing side) facing away from the aircraft door 3 when closed. The latch fitting end facing side 17 comprises an indentation 18 forming said abutment surface 19. In the latch position LP, the abutment surface 19 will be positioned in line with or adjacent the hook end 13. The definition "in line with" may mean that the a centre of the hook end 13 and the centre of the abutment surface 19 intersect a common line L that extends perpendicular to the prolongation X of the movable latch bar 9.

A screw 20 with a frictional head (not shown as covered by the hook end 13) is mounted to the hook end 13 of the anchorage-shaped latch fitting 11.

Alternatively, the frictional head faces the abutment surface 19 and is configured for frictional engagement with the abutment surface 19 of the indentation 18 in the latch position LP.

The movable latch bar 9 is formed with a recess 10 permitting the hook end 13 of the anchorage-shaped latch fitting 11 to pass the movable latch bar 9 in the open position OP for permitting closing and opening of the aircraft door. The latch fitting end facing side 17 extends from the recess 10 to the indentation 18, along which latch fitting end facing side 17 the hook end 13 is able to pass when moving the movable latch member 9 towards the open position OP or to the latch position LP, when there is no pressure differential.

Alternatively, the latch fitting end facing side 17 is formed as a sliding side having minor contact with the frictional head or hook end 13 or with any part of the anchorage-shaped latch fitting 11, when moving the movable latch bar 9 towards the open position OP or to the latch position LP.

Alternatively, the latch fitting end facing side 17 is formed as an inwardly facing side having no contact with the frictional head or hook end 13 or with any part of the anchorage-shaped latch fitting 11, when moving the movable latch bar 9 towards the open position OP or to the latch position LP.

Alternatively, the movable latch bar 9 is journaled in the aircraft fuselage and is configured to be moveable in a direction corresponding with the prolongation X of the movable latch bar 9.

The movable latch bar 9 may be configured to be movable axially in the direction of the prolongation X of the aircraft fuselage and may be journaled in bearings 55 of brackets 6 rigidly attached to the aircraft fuselage 7.

Due to the exclusive axial motion of the movable latch bar 9 when moved from the open position OP to the latch position LP, there is provided close fit bearings 55 journaling the moveable latch bar 9. The indentation 18 can pass the bearing 55.

The provision of the indentation 18 in the movable latch bar 9, which indentation 18 provides a safety self-lock functionality during flight (due to said pressure differential) by that the anchorage-shaped latch fitting 11 abuts and rigidly engages the abutment surface 19 of the indentation 18 and stops the movable latch bar 9 to move further when the upward slope 33 (or either of the upward slopes 33) of the indentation 18 eventually meets the anchorage-shaped latch fitting 11 (the hook end 13 or hook ends 13), will make it possibly to journal the movable latch bar linearly and axially without any play.

Alternatively, the movable latch bar comprises at least two indentations 18 configured to engage a respective hook end 13.

In such way is achieved a secure latching mechanism as a plurality of engagements between hook ends and abutment surfaces 19 further guarantees a secure latching due to said pressure differential.

Such close fit bearing (sliding bearing or any type of suitable bearing) will eliminate the need of use of complex driving actuator systems configured for non-linear driving of the movable latch bar.

Alternatively, the latch fitting end facing side 17 or inward facing side of the movable latch bar 9 is plane and/or linear along said prolongation.

Such close fit bearing eliminates vibrations in the self-securing latch arrangement 1.

Figs. 6-7 illustrate flowcharts showing exemplary methods of securing a movable latch member of a self-securing latch arrangement. Step 601 in Fig. 6 shows the starting of an exemplary method of securing the movable latch member of the self-securing latch arrangement, configured to latch an aircraft door to an aircraft fuselage comprising; a movable latch member configured to be movable from an open position to a latch position; an anchorage-shaped latch fitting configured for engagement with an abutment surface of the movable latch member; said engagement prevails when a pressure differential between the aircraft fuselage interior and the atmosphere causes a force pushing the aircraft door outward together with the anchorage-shaped latch fitting or movable latch member; the movable latch member comprises an latch fitting end facing side facing away from or facing toward the aircraft door when closed; the latch fitting end facing side comprises an indentation forming said abutment surface. Step 602 constitutes the performance of the exemplary method. In step 603 the method is stopped.

Alternatively, step 602 comprises the steps of; closing the aircraft door; moving the movable latch member from the open position to the latch position; locking the movable latch member in the latch position; and providing said pressure differential for bringing the anchorage-shaped latch fitting into rigid abutment and rigid engagement with the abutment surface of the indentation.

Step 701 in Fig. 7 shows the starting of an exemplary method according to a further aspect of securing the movable latch member of the self-securing latch arrangement. Step 702 regards closing the aircraft door. Step 703 regards moving the movable latch member from the open position to the latch position. Step 704 regards locking the movable latch member in the latch position. Step 705 regards and providing said pressure differential for bringing the anchorage-shaped latch fitting into abutment with the abutment surface of the indentation. Step 706 regards depressurizing the aircraft fuselage interior for bringing the aircraft door back to its spring back state releasing said force. Step 707 regards unlocking the movable latch member. Step 707 regards moving the movable latch member from the latch position to the open position. Step 708 regards opening the aircraft door. In step 709 the method is stopped.

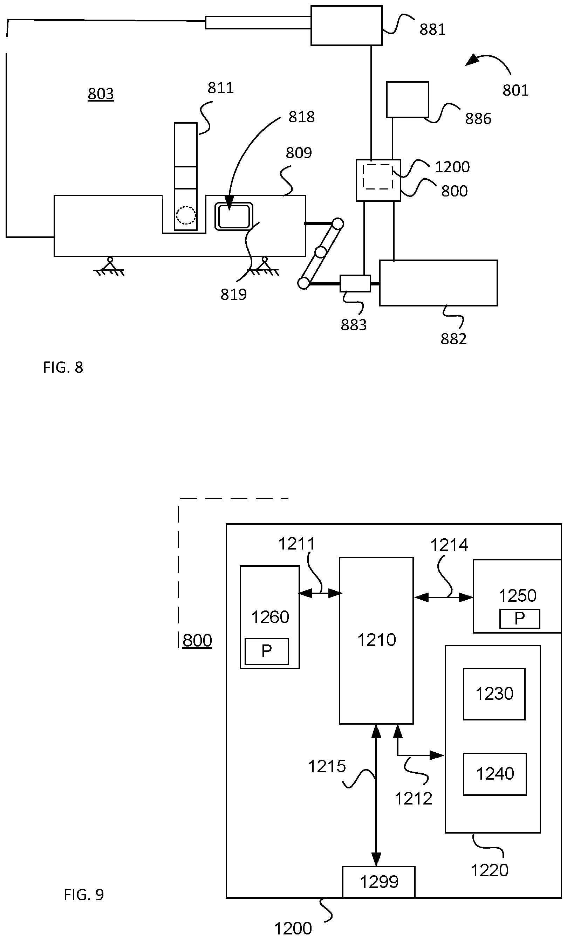

Fig. 8 illustrates a self-securing system 801 for secure locking of a movable latch member 809 of a self-securing latch arrangement according to a further example. The self-securing system 801 comprises a processor circuitry 800. The processor circuitry 800 comprises a computer 1200 configured to control an exemplary method. The self-securing system may be called self-securing latch arrangement.

The computer 1200 is configured to manage the method of closing an aircraft door 803; moving the movable latch member 809 from an open position to a latch position; locking the movable latch member 809 in the latch position; and providing a pressure differential for bringing an anchorage-shaped latch fitting 811 into abutment with an abutment surface 819 of an indentation 818. A pressurisation apparatus 886 is coupled to the processor circuitry 800 for controlling the pressure differential.

The processor circuitry 800 is coupled to a first actuator 881 configured to close the aircraft door 803 and is coupled to a second actuator 882 configured to move the movable latch member 809 from the open position to the latch position. The processor circuitry 800 is further coupled to a third actuator 883 configured to lock the movable latch member 809.

Alternatively, the second actuator actuates both the latching and the locking by means of mechanical sequencing.

Fig. 9 shows the processor circuitry 800 comprising the computer 1200. The computer 1200 comprises a non-volatile memory NVM 1220, which is a computer memory that can retain stored information even when the computer 1200 is not powered. The computer 1200 further comprises a processing unit 1210 and a read/write memory 1250. The NVM 1220 comprises a first memory unit 1230. A computer program (which can be of any type suitable for any operational database) is stored in the first memory unit 1230 for controlling the functionality of the computer 1200.

Furthermore, the computer 1200 comprises a bus controller (not shown), a serial communication port (not shown) providing a physical interface, through which information transfers separately in two directions. The computer 1200 also comprises any suitable type of I/O module (not shown) providing input/output signal transfer, an A/D converter (not shown) for converting continuously varying signals from detectors and monitoring units (not shown) of the self-securing system 801 into binary code suitable for the computer 1200.

The computer 1200 also comprises an input/output unit (not shown) for adaption to time and date. The computer 1200 also comprises an event counter (not shown) for counting the number of event multiples that occur from independent events of the self-securing system 801.

Furthermore, the computer 1200 includes interrupt units (not shown) associated with the computer for providing a multi-tasking performance and real time computing. The NVM 1220 also includes a second memory unit 1240 for external controlled operations of the self-securing system 801.

A data medium, storing a program P, comprising driver routines adapted to the actuators and is provided for operating the computer 1200 for performing the exemplary methods described herein.

The data medium storing the program P comprises a program code stored on a medium, which is readable on the computer 1200, for causing the computer 1200 to perform the exemplary methods of securing the movable latch member of the self-securing system 801, configured to latch the aircraft door to an aircraft fuselage comprising, wherein the movable latch member is configured to be movable from the open position to the latch position and the anchorage-shaped latch fitting is configured for engagement with the abutment surface of the movable latch member, said engagement prevails when the pressure differential between the aircraft fuselage interior and the atmosphere causes a force pushing the aircraft door outward together with the anchorage-shaped latch fitting or movable latch member, the movable latch member comprises an latch fitting end facing side facing away from or facing toward the aircraft door when closed; and the latch fitting end facing side comprises an indentation or depression forming said abutment surface.

The data medium storing program P further may be stored in a separate memory 1260 and/or in a read/write memory 1250. The data medium storing program P is in this embodiment stored in executable or compressed data format.

It is to be understood that when the processing unit 1210 is described to execute a specific function that involves that the processing unit 1210 executes a certain part of the program stored in the separate memory 1260 or a certain part of the program stored in the read/write memory 1250.

The processing unit 1210 is associated with a data port 1299 for communication via a first data bus 1215. The non-volatile memory NVM 1220 is adapted for communication with the processing unit 1210 via a second data bus 1212. The separate memory 1260 is adapted for communication with the processing unit 1210 via a third data bus 1211. The read/write memory 1250 is adapted to communicate with the processing unit 1210 via a fourth data bus 1214. The data port 1299 may be connectable to data links of the self-securing system 801 in Fig. 8.

When data is received by the data port 1299, the data will be stored temporary in the second memory unit 1240. After that the received data is temporary stored, the processing unit 1210 will be ready to execute the program code, in accordance with the above-mentioned procedure. Preferably, the signals (received by the data port 1299) comprise information about operational status of the self-securing system 801 in Fig. 8, such as operational status regarding e.g. the end positions of open and closed positions or latch positions.

According to one aspect, signals received by the data port 1299 may contain information about actual positions the movable latch member by means of sensors. The received signals at the data port 1299 can be used by the computer 1200 for controlling and monitoring the movable latch member. Any information may also be manually fed to the processor circuitry 800 via a suitable communication device, such as a personal computer display.

Separate sequences of the method can also be executed by the computer 1200 and the processor circuitry 900, which processor circuitry 900 runs the data medium storing program P being stored in the separate memory 1260 or the read/write memory 1250. When the computer 1200 runs the data medium storing program P, suitable method steps disclosed herein will be executed. A data medium storing a program product comprises a program code stored on the data medium is provided, which product is readable on a suitable computer, for performing the exemplary method steps herein, when the data medium storing program P is run on the computer 1200.

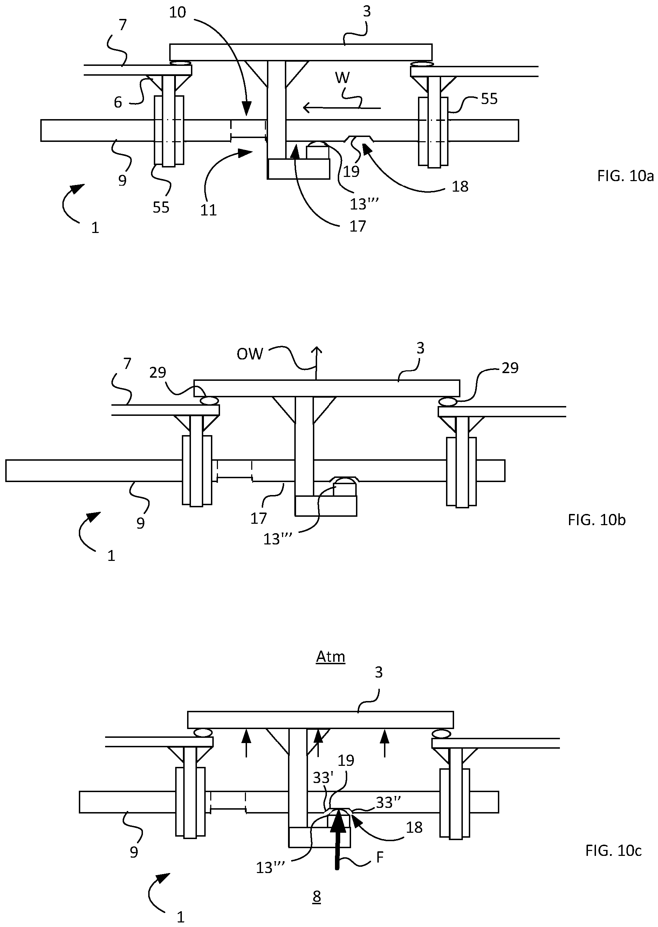

Figs. 10a-10c illustrate a self-securing latch arrangement 1 according to a further example. An abutment surface 19 of a movable latch bar 9 of the self-securing latch arrangement 1 is moved into engagement with an anchorage-shaped latch fitting outermost end 13‴ of an anchorage-shaped latch fitting 11 by moving the movable latch bar 9 according to the arrow W.

Alternatively, during the motion of the movable latch bar 9, the anchorage-shaped latch fitting outermost end 13‴ slides over a latch fitting end facing side 17 of the movable latch bar 9.

The anchorage-shaped latch fitting 11 is attached to an aircraft door 3 configured to be closed against an aircraft fuselage 7.

The movable latch bar 9 is journaled in bearings 55. The bearings are rigidly attached to the aircraft fuselage 7 via brackets 6 or other structures.

The movable latch bar 9 is moved according to the arrow W from an open position to a latch position. The open position involves that the anchorage-shaped latch fitting outermost end 13‴ is able to pass a recess 10 made in the movable latch bar 9.

Fig. 10b shows that the movable latch bar 9 has been moved to the latch position, whereas the aircraft door 3 springs outward according to arrow OW (caused by spring back properties inter alia of sealings 29 arranged between the aircraft door 3 and the aircraft fuselage 7) bringing the anchorage-shaped latch fitting outermost end 13‴ of the anchorage-shaped latch fitting 11 into engagement with the abutment surface 19.

A locking mechanism (not shown) locks the moveable latch bar 9 in the latch position.

In Fig. 10c is shown the principle of the self-securing of the moveable latch bar 9 of the self-securing latch arrangement 1 by that the aircraft fuselage interior 8 is pressurized and the aircraft fuselage interior pressure being higher than the atmospheric pressure Atm, whereby the aircraft door 3 is pushed outward bringing the anchorage-shaped latch fitting outermost end 13‴ in rigid engagement with the abutment surface 19 with a force F.

Alternatively, the abutment surface 19 (corresponding to a bottom surface of an indentation 18 formed in the moveable latch bar 9 for providing said abutment surface 19) entirely or partly being encircled by upward slopes 33', 33", which may form a border of the indentation 18.

Alternatively, the upward slope 33', exhibits such inclination that the anchorage-shaped latch fitting outermost end 13‴ is hindered to climb the upward slope 33', thus holding the moveable latch bar 9 in the latch position.

In case the locking mechanism malfunctions (highly unlikely) and the movable latch bar 9 tends to move toward the open position, the upward slope 33' will meet the anchorage-shaped latch fitting outermost end 13‴ rigidly held in engagement with the abutment surface 19 by the force F.

The above-mentioned force F bringing the anchorage-shaped latch fitting outermost end 13‴ outward in engagement with the abutment surface 19 will counteract and prevent the movable latch member 9 to move further and will prevent the anchorage-shaped latch fitting outermost end 13‴ to climb up the upward slope 33' as the force F holds the anchorage-shaped latch fitting outermost end 13' rigidly in engagement with the abutment surface 19.

Alternatively, the pressure differential and e.g. the flex properties of the aircraft door generating the force F may be pre-determined and set beforehand so that the force F will constitute a value that is higher than the pressure needed for the upward slope 33 ' to urge the anchorage-shaped latch fitting outermost end 13‴ inward or than a pressure needed for the anchorage-shaped latch fitting outermost end 13‴ to climb said upward slope 33.

In such way the moveable latch member 9 ables to be journaled in bearings 55, that permit translation of the moveable latch member 9 exclusive axially along to the elongation of the moveable latch member 9, due to the fact that the indentation 18 manages to pass the bearing 55, when the moveable latch member 9 is moved between the open position and the latch position.

The moveable latch member 9 is secured to move to the open position by said pressure differential during flight. The wideness of the abutment surface 19 seen in the direction of the prolongation of the moveable latch member 9 is wider than the wideness (also seen in the direction of said prolongation) of the anchorage-shaped latch fitting outermost end 13‴ being in frictional contact with the abutment surface.

Alternatively, the abutment surface 19 is planar.

Alternatively, the wideness of the abutment surface 19 is determined of at least one upward slope 33' or the distance between opposite formed upward slopes 33', 33" at both sides of the anchorage-shaped latch fitting outermost end 13‴ (latch fitting end), which distance is seen in the direction of said prolongation.

In such way is achieved a non-centering self-securing latch arrangement, which non-centering property of the self-securing latch arrangement 1 involves that the moveable latch member 9 can move back and forth between the upward slopes 33', 33" in case forces generating such motion of the aircraft door prevails and overcome the rigid engagement between the abutment surface 19 and the anchorage-shaped latch fitting outermost end 13‴ (latch fitting end).

The present invention is of course not in any way restricted to the examples described above, but many possibilities to modifications, or combinations of the described examples, thereof should be apparent to a person with ordinary skill in the art without departing from the invention as defined in the appended claims. The expression inwardly or inward means a direction from the closed aircraft door in a direction inward toward the centre line of the aircraft fuselage, which centre line extends centrally and parallel with the aircraft fuselage prolongation.

## Claims

1. A self-securing latch arrangement (1) configured to latch an aircraft door (3, 803) to an aircraft fuselage (7) comprising:
- a movable elongated latch bar (9, 809) being configured to be moved axially (9, 809) and configured to be movable from an open position to a latch position;
- an anchorage-shaped latch fitting (11, 811) comprising a latch fitting end (13, 13', 13", 13‴) configured for rigid engagement with an abutment surface (19, 819) of the movable elongated latch bar (9, 809) when a pressure differential between the aircraft fuselage interior (8) and the atmosphere (atm) generates a force (F) that pushes the aircraft door (3, 803), and thereby the anchorage-shaped latch fitting (11, 811) or movable elongated latch bar (9, 809), in a direction outward;
**characterized in that**
- the movable elongated latch bar (9, 809) comprises a latch fitting end facing side (17); and
- the latch fitting end facing side (17) comprises an indentation (18, 818) forming said abutment surface (19, 819).

2. The self-securing latch arrangement (1) according to claim 1, **wherein** a frictional element (22) of the anchorage-shaped latch fitting (11, 811) is configured for rigid engagement with the abutment surface (19, 819) of the indentation (18, 818).

3. The self-securing latch arrangement (1) according to claim 1 or 2, **wherein** the movable elongated latch bar (9, 809) is formed with a recess (10) permitting the latch fitting end (13, 13', 13", 13‴) to pass the movable elongated latch bar (9, 809) in the open position.

4. The self-securing latch arrangement (1) according to claim 3, **wherein** the latch fitting end facing side (17) comprises a sliding surface that extends from the recess (10) to the indentation (18, 818), along which sliding surface the anchorage-shaped latch fitting (11, 811) slides when moving the movable elongated latch bar (9, 809) towards the open position.

5. The self-securing latch arrangement (1) according to any of the preceding claims, **wherein** the abutment surface (19, 819) entirely or partly being encircled by an upward slope (33).

6. The self-securing latch arrangement (1) according to claim 5, **wherein** the upward slope (33) is configured to stop the latch fitting end (13, 13', 13", 13‴) engaging the abutment surface (19, 819) for preventing the movable elongated latch bar (9, 809) to move from the latch position.

7. A method of securing a movable elongated latch bar (9, 809) of a self-securing latch arrangement (1) configured to be moved axially, configured to latch an aircraft door (3, 803) to an aircraft fuselage (7) comprising; the movable elongated latch bar (9, 809) is configured to be movable from an open position to a latch position; an anchorage-shaped latch fitting (11, 811) comprising a latch fitting end (13, 13', 13", 13‴) configured for rigid engagement with an abutment surface (19, 819) of the movable elongated latch bar (9, 809) when a pressure differential between the aircraft fuselage interior (8) and the atmosphere (atm) generates a force (F) that pushes the aircraft door (3, 803), and thereby the anchorage-shaped latch fitting (11, 811) or movable elongated latch bar (9, 809), in a direction outward; the movable elongated latch bar (9, 809) comprises a latch fitting end facing side (17) comprising an indentation (18, 818) forming said abutment surface (19, 819); the method comprises the steps of:
- closing the aircraft door (3, 803);
- moving the movable elongated latch bar (9, 809) from the open position to the latch position;
- locking the movable elongated latch bar (9, 809) in the latch position; and
- providing said pressure differential for bringing the latch fitting end of the anchorage-shaped latch fitting (11, 811) into rigid engagement with the abutment surface (19, 819).

8. The method according to claim 7, wherein the method comprises the further step of:
- depressurizing the aircraft fuselage interior (8) for bringing the aircraft door (3, 803) back to its spring back state so that when the force ceases, a frictional resistance between the latch fitting end (13, 13', 13", 13‴) and the movable elongated latch bar (9, 809) is of such low value that the movable elongated latch bar (9, 809) enables to be moved from the latch position toward the open position, whereby the movable elongated latch bar (9, 809) slides along the latch fitting.

9. The method according to claim 8, wherein the method comprises the further steps of:
- unlocking the movable elongated latch bar (9, 809);
- moving the movable elongated latch bar (9, 809) from the latch position to the open position; and
- opening the aircraft door (3, 803).

## Patentansprüche

1. Selbstsichernde Verriegelungsanordnung (1), die dazu konfiguriert ist, eine Luftfahrzeugtür (3, 803) an einem Luftfahrzeugrumpf (7) zu verriegeln, umfassend:
- eine bewegbare längliche Verriegelungsstange (9, 809), die dazu konfiguriert ist, axial bewegt zu werden, und dazu konfiguriert ist, von einer offenen Position in eine Verriegelungsposition bewegbar zu sein;
- ein ankerförmiges Verriegelungsanschlussstück (11, 811), umfassend ein Verriegelungsanschlussstückende (13, 13', 13'', 13‴), das dazu konfiguriert ist, in einem starren Eingriff mit einer Anschlagfläche (19, 819) der bewegbaren länglichen Verriegelungsstange (9, 809) zu stehen, wenn ein Druckunterschied zwischen dem Luftfahrzeugrumpfinneren (8) und der Atmosphäre (atm) eine Kraft (F) erzeugt, welche die Luftfahrzeugtür (3, 803) und dadurch das ankerförmige Verriegelungsanschlussstück (11, 811) oder die bewegbare längliche Verriegelungsstange (9, 809) in eine Richtung nach außen drückt;
**dadurch gekennzeichnet, dass**
- die bewegbare längliche Verriegelungsstange (9, 809) eine Seite (17), die dem Verriegelungsanschlussstückende zugewandt ist, umfasst; und
- die Seite (17), die dem Verriegelungsanschlussstückende zugewandt ist, eine Vertiefung (18, 818), welche die Anschlagfläche (19, 819) bildet, umfasst.

2. Selbstsichernde Verriegelungsanordnung (1) nach Anspruch 1, **wobei ein** Reibungselement (22) des ankerförmigen Verriegelungsanschlussstücks (11, 811) zum starren Eingriff mit der Anschlagfläche (19, 819) der Vertiefung (18, 818) konfiguriert ist.

3. Selbstsichernde Verriegelungsanordnung (1) nach Anspruch 1 oder 2, **wobei** die bewegbare längliche Verriegelungsstange (9, 809) mit einer Aussparung (10) gebildet ist, die es dem Verriegelungsanschlussstückende (13, 13', 13'', 13‴) ermöglicht, in der offenen Position die bewegbare längliche Verriegelungsstange (9, 809) zu passieren.

4. Selbstsichernde Verriegelungsanordnung (1) nach Anspruch 3, **wobei die** Seite (17), die dem Verriegelungsanschlussstückende zugewandt ist, eine Gleitfläche umfasst, die sich von der Aussparung (10) bis zu der Vertiefung (18, 818) erstreckt, und wobei das ankerförmige Verriegelungsanschlussstück (11, 811) an dieser Gleitfläche entlang gleitet, wenn die bewegbare längliche Verriegelungsstange (9, 809) in Richtung der offenen Position bewegt wird.

5. Selbstsichernde Verriegelungsanordnung (1) nach einem der vorhergehenden Ansprüche, **wobei** die Anschlagfläche (19, 819) ganz oder teilweise von einer Aufwärtsschräge (33) umgeben ist.

6. Selbstsichernde Verriegelungsanordnung (1) nach Anspruch 5, **wobei die** Aufwärtsschräge (33) dazu konfiguriert ist, das Eingreifen des Verriegelungsanschlussstückendes (13, 13', 13'', 13‴) in die Anschlagfläche (19, 819) zu stoppen, um zu verhindern, dass sich die bewegbare längliche Verriegelungsstange (9, 809) aus der Verriegelungsposition bewegt.

7. Verfahren zum Sichern einer bewegbaren länglichen Verriegelungsstange (9, 809) einer selbstsichernden Verriegelungsanordnung (1), die dazu konfiguriert ist, axial bewegt zu werden, die dazu konfiguriert ist, eine Luftfahrzeugtür (3, 803) an einem Luftfahrzeugrumpf (7) zu verriegeln, umfassend: die bewegbare längliche Verriegelungsstange (9, 809), die dazu konfiguriert ist, von einer offenen Position in eine Verriegelungsposition bewegbar zu sein; ein ankerförmiges Verriegelungsanschlussstück (11, 811), umfassend ein Verriegelungsanschlussstückende (13, 13', 13'', 13‴), das dazu konfiguriert ist, in einem starren Eingriff mit einer Anschlagfläche (19, 819) der bewegbaren länglichen Verriegelungsstange (9, 809) zu stehen, wenn ein Druckunterschied zwischen dem Luftfahrzeugrumpfinneren (8) und der Atmosphäre (atm) eine Kraft (F) erzeugt, welche die Luftfahrzeugtür (3, 803) und dadurch das ankerförmige Verriegelungsanschlussstück (11, 811) oder die bewegbare längliche Verriegelungsstange (9, 809) in eine Richtung nach außen drückt; wobei die bewegbare längliche Verriegelungsstange (9, 809) eine Seite (17), die dem Verriegelungsanschlussstückende zugewandt ist, umfasst, welche eine Vertiefung (18, 818) umfasst, welche die Anschlagfläche (19, 819) bildet; wobei das Verfahren die folgenden Schritte umfasst:
- Schließen der Luftfahrzeugtür (3, 803);
- Bewegen der bewegbaren länglichen Verriegelungsstange (9, 809) aus der offenen Position in die Verriegelungsposition;
- Einrasten der bewegbaren länglichen Verriegelungsstange (9, 809) in der Verriegelungsposition; und
- Bereitstellen des Druckunterschieds, um das Verriegelungsanschlussstückende des ankerförmigen Verriegelungsanschlussstücks (11, 811) in einen starren Eingriff mit der Anschlagfläche (19, 819) zu bringen.

8. Verfahren nach Anspruch 7, wobei das Verfahren ferner den folgenden Schritt umfasst:
- Drucklos machen des Luftfahrzeugrumpfinneren (8), um die Luftfahrzeugtür (3, 803) zurück in ihren zurückfedernden Zustand zu bringen, so dass, wenn die Kraft wegfällt, ein Reibungswiderstand zwischen dem Verriegelungsanschlussstückende (13, 13', 13'', 13‴) und der bewegbaren länglichen Verriegelungsstange (9, 809) einen so geringen Wert hat, dass die bewegbare längliche Verriegelungsstange (9, 809) aus der Verriegelungsposition in die offene Position bewegt werden kann, wobei die bewegbare längliche Verriegelungsstange (9, 809) entlang des Verriegelungsanschlussstücks gleitet.

9. Verfahren nach Anspruch 8, wobei das Verfahren ferner die folgenden Schritte umfasst:
- Ausrasten der bewegbaren länglichen Verriegelungsstange (9, 809);
- Bewegen der bewegbaren länglichen Verriegelungsstange (9, 809) aus der Verriegelungsposition in die offene Position; und
- Öffnen der Luftfahrzeugtür (3, 803).

## Revendications

1. Agencement de verrouillage à fixation automatique (1) configuré pour verrouiller une porte d'aéronef (3, 803) sur un fuselage d'aéronef (7) comprenant :
- une barre de verrouillage allongée mobile (9, 809) configurée pour être déplacée axialement et configurée pour être mobile d'une position ouverte à une position de verrouillage ;
- une ferrure de verrouillage en forme d'ancrage (11, 811) comprenant une extrémité de ferrure de verrouillage (13, 13', 13'', 13‴) configurée pour un engagement rigide avec une surface de butée (19, 819) de la barre de verrouillage allongée mobile (9, 809) lorsqu'un différentiel de pression entre l'intérieur de fuselage d'aéronef (8) et l'atmosphère (atm) génère une force (F) qui pousse la porte d'aéronef (3, 803), et ainsi la ferrure de verrouillage en forme d'ancrage (11, 811) ou la barre de verrouillage allongée mobile (9, 809), dans une direction vers l'extérieur ;
**caractérisé en ce que**
- la barre de verrouillage allongée mobile (9, 809) comprend un côté faisant face à l'extrémité de ferrure de verrouillage (17) ; et
- le côté faisant face à l'extrémité de ferrure de verrouillage (17) comprend une indentation (18, 818) formant ladite surface de butée (19, 819).

2. Agencement de verrouillage à fixation automatique (1) selon la revendication 1, **dans lequel** un élément de friction (22) de la ferrure de verrouillage en forme d'ancrage (11, 811) est configuré pour un engagement rigide avec la surface de butée (19, 819) de l'indentation (18, 818).

3. Agencement de verrouillage à fixation automatique (1) selon la revendication 1 ou 2, **dans lequel** la barre de verrouillage allongée mobile (9, 809) est formée avec un évidement (10) permettant à l'extrémité de ferrure de verrouillage (13, 13', 13", 13‴) de passer la barre de verrouillage allongée mobile (9, 809) dans la position ouverte.

4. Agencement de verrouillage à fixation automatique (1) selon la revendication 3, **dans lequel** le côté faisant face à l'extrémité de ferrure de verrouillage (17) comprend une surface de glissement qui s'étend de l'évidement (10) à l'indentation (18, 818), le long de laquelle surface de glissement, la ferrure de verrouillage en forme d'ancrage (11, 811) coulisse lors du déplacement de la barre de verrouillage allongée mobile (9, 809) vers la position ouverte.

5. Agencement de verrouillage à fixation automatique (1) selon l'une quelconque des revendications précédentes, **dans lequel** la surface de butée (19, 819) est entièrement ou partiellement entourée par une pente ascendante (33).

6. Agencement de verrouillage à fixation automatique (1) selon la revendication 5, **dans lequel** la pente ascendante (33) est configurée pour arrêter l'extrémité de ferrure de verrouillage (13, 13', 13", 13‴) en prise avec la surface de butée (19, 819) pour empêcher la barre de verrouillage allongée mobile (9, 809) de se déplacer depuis la position de verrouillage.

7. Procédé de fixation d'une barre de verrouillage allongée mobile (9, 809) d'un agencement de verrouillage à fixation automatique (1) configuré pour être déplacé axialement, configuré pour verrouiller une porte d'aéronef (3, 803) sur un fuselage d'aéronef (7) comprenant : la barre de verrouillage allongée mobile (9, 809) configurée pour être mobile d'une position ouverte à une position de verrouillage ; une ferrure de verrouillage en forme d'ancrage (11, 811) comprenant une extrémité de ferrure de verrouillage (13, 13', 13'', 13‴) configurée pour un engagement rigide avec une surface de butée (19, 819) de la barre de verrouillage allongée mobile (9, 809) lorsqu'un différentiel de pression entre l'intérieur du fuselage d'aéronef (8) et l'atmosphère (atm) génère une force (F) qui pousse la porte d'aéronef (3, 803), et ainsi la ferrure de verrouillage en forme d'ancrage (11, 811) ou la barre de verrouillage allongée mobile (9, 809), dans une direction vers l'extérieur ; la barre de verrouillage allongée mobile (9, 809) comprend un côté faisant face à l'extrémité de ferrure de verrouillage (17) comprenant une indentation (18, 818) formant ladite surface de butée (19, 819) ; le procédé comprend les étapes consistant à :
- fermer la porte d'aéronef (3, 803) ;
- déplacer la barre de verrouillage allongée mobile (9, 809) de la position ouverte à la position de verrouillage ;
- verrouiller la barre de verrouillage allongée mobile (9, 809) dans la position de verrouillage ; et
- fournir ledit différentiel de pression pour amener l'extrémité de ferrure de verrouillage de la ferrure de verrouillage en forme d'ancrage (11, 811) en engagement rigide avec la surface de butée (19, 819).

8. Procédé selon la revendication 7, dans lequel le procédé comprend l'étape supplémentaire consistant à :
- dépressuriser l'intérieur du fuselage d'aéronef (8) pour ramener la porte d'aéronef (3, 803) à son état de retour élastique de sorte que lorsque la force cesse, une résistance de friction entre l'extrémité de ferrure de verrouillage (13, 13', 13'', 13‴) et la barre de verrouillage allongée mobile (9, 809) soit d'une valeur si faible que la barre de verrouillage allongée mobile (9, 809) puisse être déplacée de la position de verrouillage vers la position ouverte, de sorte que la barre de verrouillage allongée mobile (9, 809) coulisse le long de la ferrure de verrouillage.

9. Procédé selon la revendication 8, dans lequel le procédé comprend les étapes supplémentaires consistant à :
- déverrouiller la barre de verrouillage allongée mobile (9, 809) ;
- déplacer la barre de verrouillage allongée mobile (9, 809) de la position de verrouillage vers la position ouverte ; et
- ouvrir la porte d'aéronef (3, 803).
